# EUROPEAN PATENT SPECIFICATION

(11) **EP 2 363 026 B1**
(45) Date of publication and mention of the grant of the patent: **27.03.2019**
(21) Application number: 10168184.9
(22) Date of filing: 01.07.2010
(51) Int. Cl.: A21D 17/00, A21D 8/06, A21D 13/00, A21D 15/00, B65D 81/34

(54) **A packaged food product for microwave heating and process for making said packaged food product**
Verpacktes Lebensmittel zur Erwärmung in einer Mikrowelle und Verfahren zu dessen Herstellung
Produit emballé pour le chauffage à micro-ondes et procédé pour sa fabrication

(30) Priority: 03.07.2009 IT BO20090434
(43) Date of publication of application: 07.09.2011
(73) Proprietor: La Pizza + 1 S.p.A., 29027 Podenzano (IT)
(72) Inventor: Sante, Ludovico, 29019 San Giorgio Piacentino, (Piacenza) (IT)
(74) Representative: Falzoni, Davide Aldo

(56) References cited:
- EP-A1- 0 839 737
- EP-A1- 1 900 281
- EP-A2- 0 350 847
- EP-A2- 1 291 298
- WO-A1-00/35770
- WO-A1-2008/052096
- GB-A- 2 211 380
- US-A- 5 247 149
- US-A- 5 484 984
- US-A- 5 565 228
- US-A- 5 585 027
- US-A1- 2003 066 831
- US-A1- 2004 213 883
- US-B1- 6 168 812

## Description

This invention relates to a process for making a packaged food product. More specifically, the product is in the form of pizza or focaccia.

The practice of heating deep frozen or refrigerated food products in a microwave oven has become part and parcel of modern living.

Bakery products such as bread, pizza and focaccia do not, however, lend themselves to microwave heating and when heated in this way achieve a poor level of fragrance and crispiness that is in no way comparable to the freshly-baked products.

In fact, it is known that microwaving tends to give pizzas and focaccias two different characteristics, both undesirable: in the first few minutes after heating, the texture of the product becomes soggy or rubbery. As early as 7-10 minutes after heating, the texture of the product tends to toughen, becoming leathery and musty, as if long gone stale.

Microwaving also causes the crusty surface of this type of product to lose all its crispiness, quickly becoming hard and tough to chew and causing the product to lose its fragrance.

Several attempts have been made to obtain ready-baked flour-based products for brief microwave heating but without obtaining satisfactory results in terms of crispiness and fragrance.

In fact, microwave heating negatively alters the structure of the baked product, on account of the unfavourable molecular interactions between starches and proteins.

In an attempt to overcome these drawbacks, a hot-dog pack has in particular been devised, where a sausage in a fully-baked, soft flour based bread product, or roll, is placed in a hermetic container. This product, where the bread roll has a soft, uniform crust, is subjected to microwave heating for a relatively short length of time, not more than 40 seconds, and what is more, while screening the product to avoid excessive heating using large pieces of susceptor material placed above and below the product so that the crust is heated as uniformly as possible.

This process, however, is not applicable to crisp, fragrant bakery products, pizzas and focaccias, especially if the properties of the products in terms of crispness and fragrance are required to compare favourably with those of freshly-baked products.

In fact, the result of this process is basically a product with a soggy or rubbery inner bread and crust.

Moreover, the trade has yet to tackle the problem of pizzas and focaccias becoming stale in the space of a few minutes after microwave heating.

A further problem is posed by the different sensitivity to microwaves presented by the crust, the inner bread and toppings, in particular pizza toppings, which usually include cheese, such as mozzarella, and products of vegetable origin (such as mushrooms, olives, artichokes and so on) and animal origin (such as ham and so on).

In effect, in the hot dog roll mentioned above, microwaving is intended to heat only the sausage inside it without in any way altering the structure. EP 1291298 discloses a packaged food product suitable for microwave heating including a microwave susceptor and a sealed container that encloses the food product being it an hamburger sandwich or similar. EP 1900281 discloses a fully assembled frozen food product comprising a fully baked or par-baked farinaceous portion having a top bun portion and a bottom bun portion and having a filing between. EP 0839737 discloses a microwave cooking system for cooking a food product in a microwave field to produce a food product being it an entire pizza or bread. US 2003/066831 discloses a packaging arrangement for a food item being it an entire pizza that is cut into segments and positioned on microwaveable susceptor material. WO 00/35770 discloses a packing item, especially for prebaked and/or frozen dough items, e.g. pizzas, calzones, and pies, which packing item at the side facing the dough item is provided with a so-called susceptor coating. US 5247149 discloses a combination of a frozen pizza of uncooked dough covered with a topping layer except for an outer sauce-free ring of dough and a microwave susceptor component enables the pizza to be cooked in a microwave oven so that the outer ring is brown and crisp. US 6168812 discloses a microwavable pizza product and a package combination. The package combination includes a pizza crust having a semi-circular shape and a pizza topping is deposited on top of the crust. US 2004/213883 discloses a dough that can bake to form a bread product having a home baked taste, aroma, freshness, attractive browned character and pleasing crispness of a homemade bread. The product can be obtained by baking the dough in a microwave oven. EP 0350847 discloses a disposable microwave browning and crisping package. GB 2211380 discloses cooking of a foodstuff packed in a package receiving microwave oven radiation beams by preparing a pouch suitable for filling the foodstuff therein. US 5585027 discloses a pattern of tear perforations in the substrate that forms a microwave reheating support. WO 2008/052096 discloses a blank and a construct formed therefrom for heating, browning and or/ crisping a food item. US 5484984 discloses an oven- able food package for holding a food product. The package has a base which is constructed and arranged such that at least one exterior gap is created between the base and the support surface of the oven (conventional or microwave) in which the package and food product are placed into to be cooked. US 5565228 discloses a food product tray including a base defining an opening and a floor member covering the opening.

This invention proposes a novel solution, alternative to the solutions known up to now, and/or, more specifically, aims to overcome one or more of the above mentioned drawbacks, and/or to meet one or more of the above mentioned needs. Accordingly, it is provided a process according to claim 1 for making a packaged food product, for microwave heating, characterized in that a portion of flour-based oven-baked food product, being pizza or focaccia, in a parbaked condition, is obtained having substantially uniform moisture and structure from the outer edge towards the centre of the portion; and in that the portion of food product is inserted in a pack.

It is also provided a packaged food product, in particular for microwave heating, comprising a portion of flour-based oven-baked food product, in particular pizza or focaccia, and a pack containing the portion of food product, characterized in that the portion of food product is in the parbaked condition and has substantially uniform moisture and structure from the outer edge towards the centre of the portion.

Thus, after suitable baking in a microwave oven, a portion of product with a uniformly fragrant texture is obtained.

In effect, based on the fact that parbaking in a conventional oven varies the structure of the product from the outside towards the centre, the inventor concluded that it would not be desirable to microwave a parbaked product whose outer and central parts differed considerably in structural characteristics.

In practice, the inventor reasoned that to obtain a satisfactory end product, it would instead be desirable to start from a parbaked product whose moisture and structure are as uniform as possible, so as to be able to complete the baking process in a manner optimal, uniform and simultaneous for the entire mass of the food product.

According to another viewpoint, or particularly preferred embodiment, it is contemplated the use of a food product portion whose inner bread is soft and spongy and emerges towards the outside at the outer lateral surface and, more specifically, at the outer edge face, or surface, of the product. According to another aspect, providing a parbaked food product portion that does not have crusty lateral edge zones makes it possible to heat the product evenly, completing the baking process to obtain the required uniform fragrance for the entire product portion.

Furthermore, it is provided a packaged food product, in particular for microwave heating, comprising a portion of flour-based oven-baked food product, in particular pizza or focaccia, and a pack containing the portion of food product, characterized in that the portion of food product is in the parbaked condition and has substantially uniform moisture and structure from the outer edge towards the centre of the portion, and characterized also in that the food product portion has at least one surface which is browned and not hardened positioned at a sheet of susceptor material.

Thus, after suitable baking in a microwave oven, an inner bread that is uniformly fragrant and an outside surface that is crisp but not hard are obtained simultaneously.

In effect, using a parbaked food product portion having a zone, in particular an underside zone that is browned but not hard thanks to the provision of a sheet of susceptor material at that zone, makes it possible, upon completion of the microwave baking process, to obtain a thin a crispy surface crust.

In short, a product is obtained which has a fragrant texture and an outside surface that is browned and crispy but not hardened.

These and other innovative aspects of the invention are set out in the appended claims and its technical features and advantages are apparent from the detailed description which follows of a nonlimiting example embodiment of it with reference to the accompanying drawings, in which:
- Figure 1 is a perspective view of a preferred embodiment of the packaged food product according to this invention;
- Figure 2 is a cross sectional view, through the line II-II in Figure 1, of the preferred embodiment of the packaged food product according to the invention;
- Figure 3 is a side view of the preferred embodiment of the packaged food product at an intermediate stage of the microwave baking process;

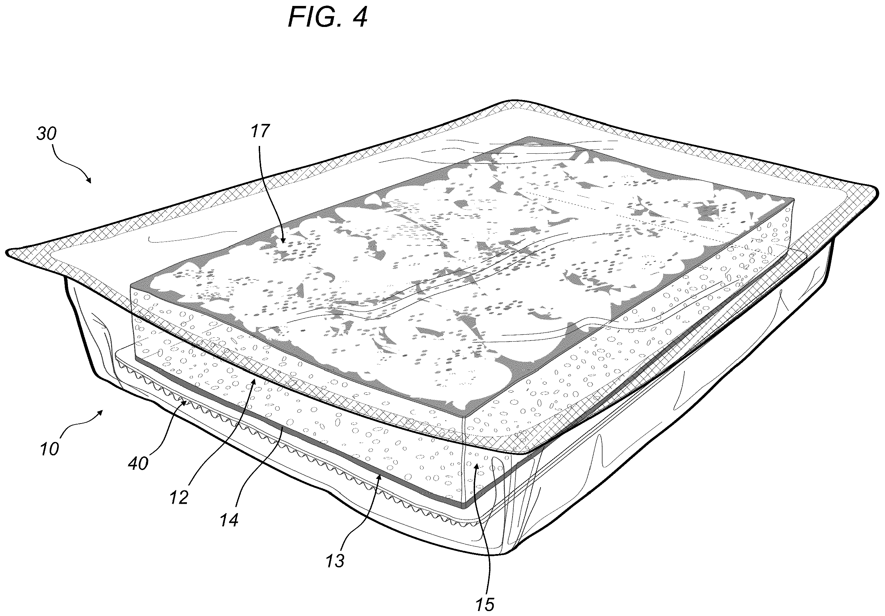

- Figure 4 is a perspective view of the preferred embodiment of the packaged food product at the end of the microwave baking process, showing in particular the melted cheese garnish;
- Figure 5 illustrates the different steps in the process of manufacturing this preferred embodiment of the packaged food product.

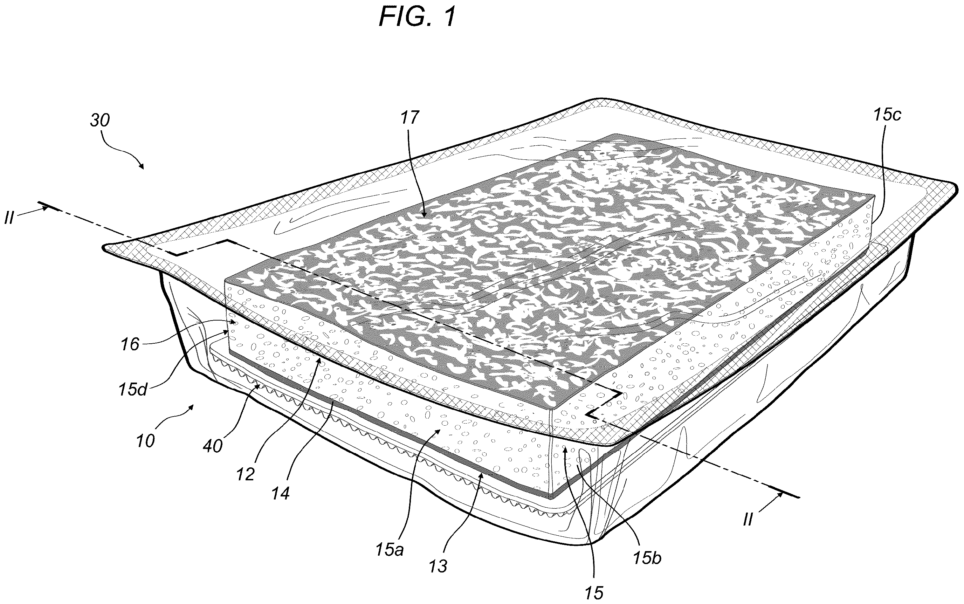

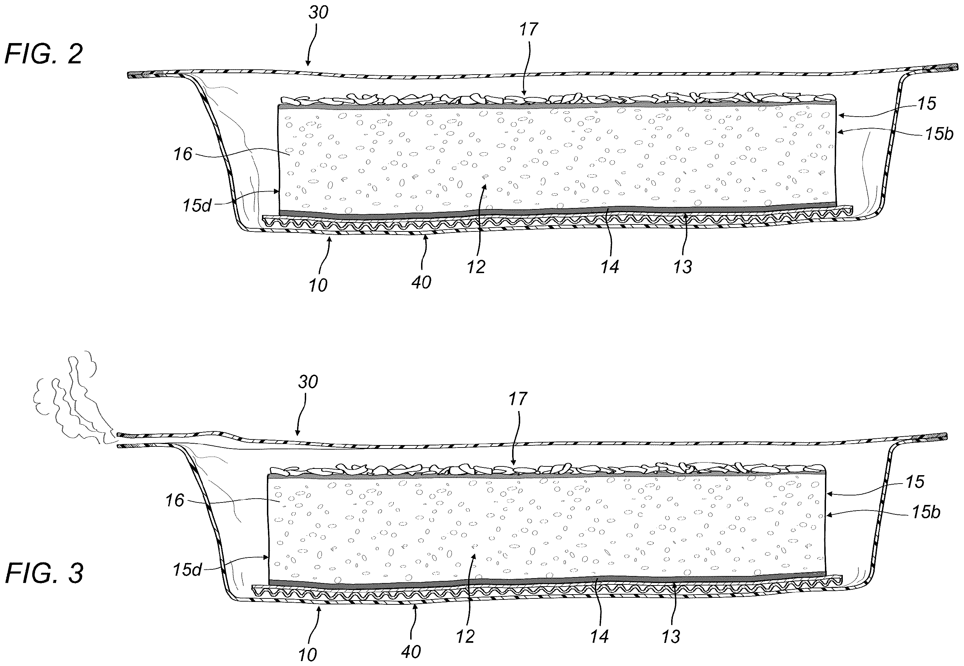

Figures 1 and 2 illustrate a preferred embodiment 10 of the packaged food product intended for microwave baking and comprising a portion 12 of flour-based or oven-baked food product, in particular pizza, a pack 30 containing the portion 12 of food product, and a sheet 40 of susceptor material housed inside the pack 30 together with the portion 12 of food product.

According to the invention, the portion 12 of food product has an underside 13, a lateral edge surface 15 and an upper surface 17.

According to the invention, as illustrated, the food product portion 12 is parbaked and has an outside surface 14, which is browned and not hardened, and a porous, spongy inner bread 16. According to the invention, from the outer edge towards the centre of the portion, and more specifically, in this preferred embodiment of it, horizontally from the respective lateral edge face 15 towards the central zone of the portion, the parbaked portion 12 has uniform moisture and structure.

Further, advantageously, the food product portion 12 has a corresponding surface 14 which is browned and not hardened, positioned at the sheet 40 of susceptor material.

According to the invention, this food product portion 12 is in a parbaked, or partly baked, condition and its inner bread, although it has the structure of a baked product, that is to say, although as a whole it has a soft, porous texture with a firm interconnected structure forming a large number of pores or cavities, it still has, or maintains, a moisture content that is higher than that of the product when fully baked so that it can sustain further heating to obtain a fragrant product at the end of the baking process.

In another embodiment, not illustrated, the packaged food product portion might be in the form of a focaccia having the same characteristics as the pizza described here, but without the tomato sauce topping and with a browned upper surface or face.

The focaccia, too, might be garnished, for example with cherry tomatoes or other ingredients.

The sheet 40 of susceptor material is in turn positioned at the browned, non-hardened material surface 14 of the food product portion 12, and more specifically, between its underside face 13, and the bottom wall 34 of the pack.

According to the invention, the food product portion 12 is thus in a parbaked condition, such that one of its surfaces, and more specifically, its underside surface is browned but not hardened, said underside surface being positioned at the sheet 40 of susceptor material, and more specifically, resting on the latter.

According to the invention, the inner bread 16 of the food product portion 12 is soft, porous and spongy and emerges towards the outside at the outer lateral surface of the product portion itself, that is to say, it is designed to form the outer edge surface 15 of the food product portion 12. According to the invention, the porous, spongy inner bread 16 forms the entire outer lateral surface 15 of the product portion 12, that is, all the lateral surfaces 15a, 15b, 15c, 15d of the product portion.

Thus, after suitable baking in a microwave oven, a product portion is obtained which has a uniformly fragrant inner bread and a crisp, crustified underside surface.

In practice, microwaving causes part of the moisture in the product to evaporate, completing the baking process of the inner bread and creating a thin crispy crust 14 at the bottom.

When the food product portion 12 is in the form of focaccia, the upper surface of the parbaked portion has no tomato sauce topping and is browned lightly and in any case browned to a lesser extent than the surface 14 on the underside.

The browned surface 14 on the underside is obtained by baking in contact with a hot surface, preferably a hot metal surface of a corresponding baking tin heated in a conventional oven which is not a microwave. When the food product portion is focaccia, the browned upper surface 17 of the product portion 12 is obtained by heating in a conventional oven, which is not a microwave, but without contact with a metal surface as in the case of the surface 14 on the underside of the product. As illustrated, the food product portion 12 has a flat quadrangular shape but might have any other desired shape, as for example, oval or triangular.

As illustrated, the food product portion 12 has a respective lateral edge face 15.

In practice, it is provided a product portion 12 having an outside surface comprising an underside surface 13, on which it rests - and more specifically on which it rests on the susceptor layer 40 of the pack - an upper face 17 and a lateral edge face 15 which extends, in particular perpendicularly, between the underside surface 13 and the upper face 17.

MAs stated, the inner bread of the product is a flour-based bread 16 parbaked to a soft, spongy texture, obtained, more specifically, by removing the outside crustified surface I3 of the parbaked mass from which the portion 12 is obtained, and, if necessary, a layer of suitable thickness under the outside crustified surface I3, as will become clearer as this description continues.

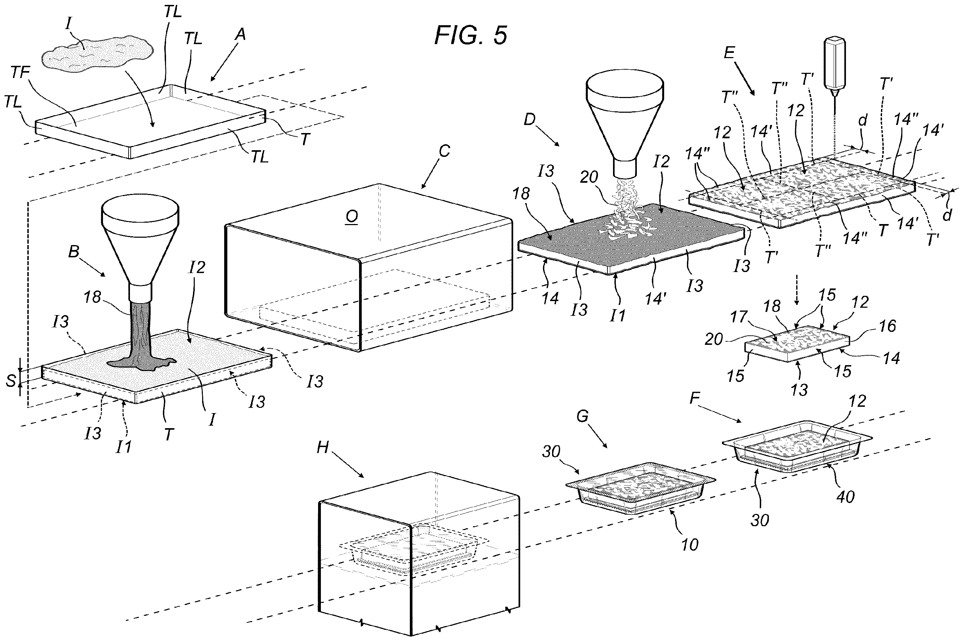

As illustrated in Figure 5, in an advantageous process for making a packaged food product 10, a portion 12 of parbaked food product is obtained having uniform moisture and structure from the outer edge towards the centre of the portion and also having at least one surface 14 which is browned and not hardened.

According to the invention, the advantageous process for making a packaged food product 10 comprises obtaining a food product portion 12 where the inner bread 16 emerges laterally of the product or forms the lateral edge surface 15 of the product portion.

As illustrated in Figure 5, in a step A, a mass I of dough, preferably made from soft wheat flour, water, salt, yeast and other ingredients, is placed in a baking tin T which is fed along the preparation line.

In a subsequent step B, the tomato sauce 18 is spread on the flattened mass I of dough. Thus, the mass I has an upper surface I2 topped with a layer of tomato sauce.

The tomato sauce is sufficiently fluid to be easily spread to form a uniform or substantially uniform layer on the upper surface of the dough and to form the upper surface I2 of the mass to be baked. Otherwise, when the preparation is in the from of focaccia or the like, instead of pizza, as illustrated here, the upper surface I2 of the mass to be baked is, obviously, formed by the upper surface of the mass itself.

The process continues, in a step C, by heating the mass I in an oven O, preferably of a conventional type, that is to say, an oven which is designed to heat by convection, conduction and irradiation, but not microwaves, in such a way as to bake the product to a predetermined extent to give it a spongy structure and a brown and not hardened outside surface 14, 14'.

In practice, baking of the dough I is not completed and is such as to give it the spongy structure of a baked product while maintaining the moisture content at a level higher than the moisture content of a finished, or fully baked, product.

In a step D following that of heating in the conventional oven, the raw topping, in particular in the form of mozzarella 20, is applied.

Next, to obtain a parbaked food product portion having substantially uniform baking characteristics, in a subsequent step E, the parbaked, garnished mass is advantageously cut to form product portions 12.

Cutting makes it possible to form one or more food product portions 12 having uniform moisture and structure.

More specifically, cutting removes a peripheral portion 14" of the food product of predetermined thickness or width, in such a way that the lateral edge surface 15 of the product portion is without the browned crusty surface 14' and the portion 14" which is adjacent the crust 14' and which has undergone maximum transformation and loss of moisture during parbaking. The width "d" of the removed part 14" is preferably between 10 mm and 30 mm. The width "d" is measured from the corresponding outer lateral surface 13 of the mass I towards the inside of the parbaked mass I itself. Cutting thus creates a food product portion having substantially uniform parbaking properties and where the inner bread 16 emerges laterally of the product or forms the lateral edge face of the product portion 12.

In a subsequent step F, after the product portion 12 has been made, it is placed in a tray 30 in which the susceptor 40 has already been placed, in such a way that the sheet 40 of susceptor material is between the crusty surface 14 of the product portion 12 and the corresponding bottom wall 34 of the pack.

Next, in a step G, the cover 33 is applied and hermetically sealed to the tray 32 but in such a way that at least one side of the cover can be opened automatically during subsequent baking in the microwave oven.

The step of applying the cover is accompanied by the provision of a modified atmosphere inside the pack.

In a subsequent step H, the packaged product is then refrigerated, frozen or deep-frozen.

The product might also be used as a fresh product, not refrigerated or frozen.

More specifically, as illustrated, the outside surface of the mass I comprises an underside surface I1, an upper surface I2 and a peripheral edge face I3, which extends, in particular perpendicularly, between the underside surface I1 and the upper face I2 of the mass.

As illustrated, more specifically, the peripheral edge face of the mass comprises a plurality of lateral faces I3.

As illustrated, the mass I has a height, or thickness, "S" which is smaller than the other plan, or horizontal, dimensions of the mass and which, obviously, coincides with the height, or thickness, of the product portion 12.

In practice, according to the process according to the invention, the respective food product portion is obtained from a mass I of flour-based dough which is baked, or parbaked, to a predetermined extent, in particular until the outside surface is browned and the inner bread is soft and spongy, while maintaining a higher moisture content than that of the product when fully baked.

In practice, the outside surface of the mass is the part of it which is most heated since it is the part which, during baking or parbaking, faces or is in contact with the heating means. The heating means are preferably embodied by the material of the container, or support T, of the mass of dough in the flattened condition, consisting for example of the bottom wall TF and the lateral walls of a metal baking tin T, whose surfaces are in direct contact with a facing outside surface I1, I3 of the mass I, and more specifically, an underside surface I1 and a lateral edge surface I3 of the latter.

In practice, according to the process according to the invention, it is contemplated advantageously obtaining systematically from the parbaked mass I, which has a browned outside surface, one or more product portions 12 without at least part of the outside surface of the mass I, and more specifically, without the peripheral edge surface 13 of the baked or parbaked mass.

In practice, according to the invention, the product portions 12 obtained from the mass I are without the peripheral edge face I3 of the baked or parbaked mass I.

As illustrated, according to the process, each product portion 12 is obtained by removing from the mass I, and more specifically, by cutting from the mass I.

Advantageously, according to the process, a product portion 12 is obtained by removing from the mass I a predetermined peripheral portion 14" of food product with the outside surface I3.

In practice, when the portion 12 obtained from the mass I is such that a respective lateral face of it coincides with at least part of the outer peripheral surface I3 of the mass itself, the portion 12 is formed by also cutting off a peripheral portion 14" of product with the outside surface 13.

In a preferred mode of proceeding, after having made a parbaked mass I, a peripheral edge portion 14" of the mass I is removed from the mass I, and more specifically, the entire peripheral edge portion 14" extending all the way round the perimeter of the mass I is removed and one or more product portions 12 are obtained, in particular by cutting them from the mass I (along respective lines T").

The peripheral portion 14" of the mass I is, as illustrated, delimited between the lateral edge face I3 of the mass I and the separating or cutting line T', which defines at least part of the outside surface 15 of the product portion 12 obtained from the mass I.

In practice, the product portion 12 is obtained by cutting from the parbaked mass I, a predetermined peripheral portion 14" of food product comprising the outside browned surface, or face, I3 of the mass I.

The invention described above is susceptible of industrial application.

## Claims

1. A process for making packaged food product portions (10) for microwave heating, the food product portion (12) being a pizza or focaccia and having an outside surface defined by an underside face (13) on which it rests, a top face (17) and a outer lateral face (15) between the underside face (13) and the top face (17), said portion of food product portion (12) being in a parbaked condition and such that the food product portion has a uniform structure from the outer edge (15) towards the centre of the portion (12); and being inserted in a pack (30); the food product portion is obtained from a mass (I) of flour-based dough having an outside surface (II, I2, I3) and an inner bread, the outside surface of the mass (I) having an underside face (I1), an upper face (I2) and an edge face (I3) between the underside and upper faces (I1, 12); the mass being parbaked to a predetermined extent by heating the same mass (I) in an oven (0) which is not a microwave, in such a way as to give it a spongy structure and a brown and not hardened outside surface; **characterized in that** of obtaining from the mass (I) one or more product portions (12) that are without the edge face (I3) of the outside surface (I3) of the parbaked mass and have the porous, spongy inner bread (16) that forms the entire outer lateral surface (15) of the product portion (12).

2. The process according to claim 1, **characterized in that** the moisture content of the portion (12) of product is greater than its moisture content once fully baked.

3. The process according to any of the foregoing claims, **characterized in that** a food product portion (12) is obtained, having at least one surface (14) which is browned and not hardened, and **in that** the surface (14) which is browned and not hardened of the food product portion (12) is positioned at a sheet (40) of susceptor material.

4. The process according to any of the foregoing claims, **characterized in that** a food product portion (12) is obtained in which the inner bread emerges laterally or at the sides of the portion.

5. The process according to any of the foregoing claims, **characterized in that** the product portion (12) is obtained by removing or cutting from the mass (I) .

6. The process according to any of the foregoing claims, **characterized in that** the product portion (12) is obtained by removing from the mass a predetermined peripheral portion (14") of food product which comprises the outside surface (I3).

7. The process according to claim 6, **characterized in that** the product portion (12) is obtained by cutting from the mass (I) a predetermined peripheral portion (14") of food product which comprises the outside surface (I3).

8. The process according to claim 6 or 7, **characterized in that** it comprises removing from the parbaked mass (I) a peripheral portion (14") having a width (d) of between 10 mm and 30 mm.

9. The process according to any of the foregoing claims, **characterized in that** to obtain a food product portion in which the inner bread emerges at the sides of the food product portion, a mass (I) of flour-based dough is heated in a suitable container in such a way as to parbake the product to a predetermined extent.

10. The process according to any of the foregoing claims, **characterized in that** the food product portion (12) is in the form of focaccia, the upper surface of the parbaked portion has no tomato sauce topping and is browned lightly and in any case browned to a lesser extent than the surface on the underside.

11. The process according to any of the foregoing claims, browned surface (14) on the underside is obtained by baking in contact with a hot surface, preferably a hot metal surface of a corresponding baking tin heated in a conventional oven.

12. The process according to any of the foregoing claims, **characterized in that** the food product portion (12) has a raw topping which is added on the food product portion (12) in the parbaked condition.

## Patentansprüche

1. Verfahren zur Herstellung von Portionen eines verpackten Lebensmittels (10) zur Erwärmung in einer Mikrowelle, wobei es sich bei der Lebensmittelportion (12) um eine Pizza oder eine Focaccia handelt, aufweisend eine außenseitige Oberfläche, definiert durch eine untere Seitenfläche (13), auf der sie ruht, eine obere Seitenfläche (17) und eine äußere Seitenfläche (15) zwischen der unteren Seitenfläche (13) und der oberen Seitenfläche (17), wobei diese Portion einer Lebensmittelportion (12) vorgebacken und so beschaffen ist, dass die Lebensmittelportion eine gleichförmige Struktur von der Außenkante (15) zur Mitte der Portion (12) umfasst und in eine Packung (30) eingefügt ist, wobei die Lebensmittelportion aus einer Masse (I) eines mehlbasierten Teigs erhalten ist, aufweisend eine außenseitige Oberfläche (I1, I2, I3) und ein inneres Brot, wobei die außenseitige Oberfläche der Masse (I) eine untere Seitenfläche (I1), eine obere Seitenfläche (I2) und eine randseitige Seitenfläche (I3) zwischen der unteren und der oberen Seitenfläche (I1, I2) aufweist, wobei die Masse bis zu einem vorgegebenen Maß vorgebacken ist, indem die Masse (I) in einem Ofen (0) erhitzt wird, der keine Mikrowelle ist, sodass sie eine schwammige Struktur und eine braune, aber nicht gehärtete außenseitige Oberfläche aufweist, **dadurch gekennzeichnet, dass** aus der Masse (I) eine oder mehrere Produktportionen (12) erhalten werden, die keine randseitige Seitenfläche (I3) der außenseitigen Oberfläche (I3) der vorgebackenen Masse aufweisen und das poröse, schwammige innere Brot (16) besitzen, das die gesamte äußere seitliche Oberfläche (15) der Produktportion (12) formt.

2. Verfahren nach Anspruch 1, **dadurch gekennzeichnet, dass** der Feuchtigkeitsgehalt der Produktportion (12) größer ist als der Feuchtigkeitsgehalt, nachdem dieses vollständig gebacken ist.

3. Verfahren nach einem der vorhergehenden Ansprüche, **dadurch gekennzeichnet, dass** eine Lebensmittelportion (12) erhalten wird, aufweisend mindestens eine Oberfläche (14), die gebräunt und nicht gehärtet ist, und dadurch, dass die Oberfläche (14) der Lebensmittelportion (12), die gebräunt und nicht gehärtet ist, an einer Folie (40) eines Suszeptormaterials positioniert ist.

4. Verfahren nach einem der vorhergehenden Ansprüche, **dadurch gekennzeichnet, dass** eine Lebensmittelportion (12) erhalten wird, in der das innere Brot seitlich oder an den Seiten der Portion hervorsteht.

5. Verfahren nach einem der vorhergehenden Ansprüche, **dadurch gekennzeichnet, dass** die Produktportion (12) erhalten wird, indem sie von der Masse (I) entfernt oder abgeschnitten wird.

6. Verfahren nach einem der vorhergehenden Ansprüche, **dadurch gekennzeichnet, dass** die Produktportion (12) erhalten wird, indem von der Masse ein vorgegebener Umfangsabschnitt (14") des Lebensmittels entfernt wird, der die außenseitige Oberfläche (I3) umfasst.

7. Verfahren nach Anspruch 6, **dadurch gekennzeichnet, dass** die Produktportion (12) erhalten wird, indem von der Masse (I) ein vorgegebener Umfangsabschnitt (14") des Lebensmittels abgeschnitten wird, der die außenseitige Oberfläche (I3) umfasst.

8. Verfahren nach Anspruch 6 oder 7, **dadurch gekennzeichnet, dass** es das Entfernen eines Umfangsabschnitts (14"), aufweisend eine Breite (d) zwischen 10 mm und 30 mm von der vorgebackenen Masse (I) umfasst.

9. Verfahren nach einem der vorhergehenden Ansprüche, **dadurch gekennzeichnet, dass** eine Masse (I) eines mehlbasierten Teils in einem geeigneten Behälter erhitzt wird, sodass das Produkt bis zu einem vorgegebenen Maß vorgebacken wird, um eine Lebensmittelportion zu erhalten, in der das inntere Brot an den Seiten der Lebensmittelportion hervorsteht.

10. Verfahren nach einem der vorhergehenden Ansprüche, **dadurch gekennzeichnet, dass** die Lebensmittelportion (12) die Form einer Focaccia aufweist, wobei die obere Oberfläche der vorgebackenen Portion keinen Tomatensaucenbelag aufweist und geringfügig gebräunt ist und in jedem Fall in einem geringeren Maß gebräunt ist als die Oberfläche der Unterseite.

11. Verfahren nach einem der vorhergehenden Ansprüche, wobei die gebräunte Oberfläche (14) an der Unterseite erhalten wird, indem sie in Kontakt mit einer heißen Oberfläche gebacken wird, vorzugsweise einer heißen Metalloberfläche eines entsprechenden Backblechs, das in einem herkömmlichen Ofen erhitzt wird.

12. Verfahren nach einem der vorhergehenden Ansprüche, **dadurch gekennzeichnet, dass** die Lebensmittelportion (12) einen rohen Belag aufweist, der der Lebensmittelportion (12) im vorgebackenen Zustand hinzugefügt wird.

## Revendications

1. Procédé de fabrication de portions de produit alimentaire emballé (10) pour le chauffage à microondes, la portion (12) de produit alimentaire étant une pizza ou une focaccia et comportant une surface extérieure définie par une face inférieure (13) sur laquelle celle-ci repose, une face supérieure (17) et une face latérale extérieure (15) entre la face inférieure (13) et la face supérieure (17), ladite partie de portion (12) de produit alimentaire étant dans une condition précuite et telle que la portion de produit alimentaire comporte une structure uniforme du bord extérieur (15) vers le centre de la portion (12) ; et étant introduite dans un emballage (30) ; la portion de produit alimentaire est
obtenue à partir d'une masse (I) de pâte à base de farine comportant une surface extérieure (I1, I2, I3) et une pâte interne, la surface extérieure de la masse (I) comportant une face inférieure (I1), une face supérieure (I2) une face de bord (I3) entre les faces inférieure et supérieure (I1, I2); la masse étant précuite jusqu'à un degré de cuisson prédéterminé en chauffant la même masse (I) dans un four (O) n'étant pas un microonde, de manière à lui donner une structure spongieuse et une surface extérieure brune et non durcie ; **caractérisé par** l'obtention à partir de la masse (I) d'une ou plusieurs portions (12) de produit étant sans la face de bord (I3) de la surface extérieure (I3) de la masse précuite et comportant la pâte interne (16) poreuse et spongieuse formant toute la surface latérale externe (15) de la portion (12) de produit.

2. Procédé selon la revendication 1, **caractérisé en ce que** la teneur en humidité de la portion (12) de produit est supérieure à la teneur en humidité une fois entièrement cuite.

3. Procédé selon l'une quelconque des revendications précédentes, **caractérisé en ce qu'**une portion (12) de produit alimentaire est obtenue en ayant au moins une surface (14) étant brunie et non durcie, et **en ce que** la surface (14) étant brunie et non durcie de la portion (12) de produit alimentaire soit positionnée en correspondance d'une feuille (40) de matériau suscepteur.

4. Procédé selon l'une quelconque des revendications précédentes, **caractérisé en ce qu'**une portion (12) de produit alimentaire est obtenue dans laquelle la pâte interne émerge latéralement ou sur les côté de la portion.

5. Procédé selon l'une quelconque des revendications précédentes, **caractérisé en ce que** la portion (12) de produit est obtenue en retirant ou en coupant dans la masse (1).

6. Procédé selon l'une quelconque des revendications précédentes, **caractérisé en ce que** la portion (12) de produit est obtenue en retirant de la masse une portion périphérique (14") prédéterminée de produit alimentaire qui comprend la surface extérieure (I3).

7. Procédé selon la revendication 6, **caractérisé en ce que** la portion (12) de produit est obtenue en coupant de la masse (1) une portion périphérique (14") prédéterminée de produit alimentaire qui comprend la surface extérieure (I3).

8. Procédé selon la revendication 6 ou 7, **caractérisé en ce qu'**il comprend le retrait de la masse précuite (I) d'une portion périphérique (14") ayant une largeur (d) comprise entre 10 mm et 30 mm.

9. Procédé selon l'une quelconque des revendications précédentes, **caractérisé par** l'obtention d'une portion de produit alimentaire dans laquelle la pâte interne émerge sur les côtés de la portion de produit alimentaire, une masse (1) de pâte à base de farine est chauffée dans un récipient approprié de manière à précuire le produit à un degré de cuisson prédéterminé.

10. Procédé selon l'une quelconque des revendications précédentes, **caractérisé en ce que** la portion (12) de produit alimentaire se présente sous forme de focaccia, la surface extérieure de la portion précuite ne comporte pas de garniture à la sauce tomate et est légèrement brunie et dans tous les cas jusqu'à un degré de cuisson moindre que la surface sur la face inférieure.

11. Procédé selon l'une quelconque des revendications précédentes, **caractérisé en ce que** la surface brunie (14) sur la face inférieure est obtenue par cuisson au contact d'une surface chaude, de préférence une surface métallique chaude d'un moule chauffée dans un four conventionnel.

12. Procédé selon l'une quelconque des revendications précédentes, **caractérisé en ce que** la portion (12) de produit alimentaire comporte une garniture crue étant ajoutée sur la portion de produit alimentaire (12) dans la condition précuite.
